# EUROPEAN PATENT APPLICATION

(11) **EP 1 956 755 A1**
(43) Date of publication of application: **13.08.2008**
(21) Application number: 07002758.6
(22) Date of filing: 08.02.2007
(51) Int. Cl.: H04L 12/28, H04L 29/06

(54) **Network controlled overhead reduction of data packets by route optimization procedure**

(71) Applicant: MATSUSHITA ELECTRIC INDUSTRIAL CO., LTD., Osaka 571-8501 (JP)
(72) Inventor: Velev, Genadi, 63225 Langen (DE); Bachmann, Jens, 63225 Langen (DE); Weniger, Kilian, 63225 Langen (DE)
(74) Representative: Grünecker, Kinkeldey, Stockmair & Schwanhäusser Anwaltssozietät

(57) **Abstract**

The invention relates to a method for reducing the header size of data packets exchanged between a Mobile Node (MN) and a gateway that is located between the MN and a Corresponding Node (CN). Different sort of headers are utilized between the MN and the gateway, and between the gateway and the CN. The sort of header, obtained by an optimizing procedure, allows to reduce the header size of exchanged packets on said data path section. To achieve this, a modified route optimization (RO) process is performed between the MN and the gateway, wherein the gateway acts on behalf of the CN. After completing the first RO process, the MN initiates and performs a second RO process with the gateway acting as CN. After completing both route optimization processes, data packet transmission is performed between the CN and the gateway after switching from IPsec tunnel mode to IPsec transport mode.

## Description

### FIELD OF THE INVENTION

The invention relates to a method for reducing the header size of data packets by utilizing route-optimized and non-route-optimized headers for the data packets, that are exchanged between a mobile node (MN) and a correspondent node (CN). The invention mainly applies to communication between a mobile node and a corresponding node, wherein a gateway (PDG) in the communication applies additional encapsulation of data packets, thereby increasing the data traffic. In particular, the route-optimized and non-route-optimized headers are established by performing a first route-optimization procedure between the mobile node and the gateway, performed by the gateway acting on behalf of the correspondent node, and a second route optimization process between the mobile node and the gateway, initiated by the mobile node. Furthermore, after completing both route optimization processes, the exchange of data packets is performed after switching to another IPsec mode.

### TECHNICAL BACKGROUND

Communications systems evolve more and more towards an Internet Protocol (IP)-based network. They typically consist of many interconnected networks, in which speech and data is transmitted from one terminal to another terminal in pieces, so-called packets. IP packets are routed to the destination by routers in a connection-less manner. Therefore, packets comprise IP header and payload information, whereby the header comprises among other things source and destination IP address.

For scalability reasons, an IP network uses a hierarchical addressing scheme. Hence, an IP address does not only identify the corresponding terminal, but additionally contains location information about this terminal. With additional information provided by routing protocols, routers in the network are able to identify the next router towards a specific destination.

In particular, a process referred to as routing is used to move data packets from a source to a destination over at least one intermediate network. In order for the data packet to reach the destination, the data packet needs to be handed off from one router to another, until it gets to the physical network of the destination device. This is also referred to as next-hop routing, since the routing is based on a step-by-step basis, that is, the exact path between the source and the destination is not known at the beginning, but each intermediate router knows the next-hop router to which to forward the data packet. The main advantage achieved by this is that each router only needs to know which neighboring router should be the next recipient for a given data packet, rather than knowing the exact route to every destination network.

Exemplary, after the source device sends a packet to its local router, the data link layer of the local router passes it up to the router's IP layer. Correspondingly, after removing the layer 2 frame, the layer 3 header of the packet is examined, and the router decides to which next router the packet is to be sent. Consequently, the packet is re-encapsulated in an appropriate layer 2 frame and is passed back down to the data link layer, which sends it over one of the router's physical network links to the determined next router.

In this respect, a router maintains a set of information, called routing table, that provides a mapping between different network IDs and the other routers to which it is connected. Correspondingly, the router checks the destination IP address of a data packet against the routing table entries to determine the next-hop router, based on the longest match of the destination address with an entry of the routing table. In addition, a metric value defined for each routing table entry allows to rate, based on certain criteria, particular routing entries, and thus to select among several possible paths the best path.

The routing tables are thus relevant for an efficient provision of data and may be configured manually by an operator, or dynamically. A manual setting of static routes is only feasible for smaller networks, whereas in the common internet, which changes constantly, mainly dynamic routing tables are applied. The automatic construction of routing tables is managed and updated by routing protocols, involving a series of periodic or on-demand messages containing routing information that is exchanged between routers.

The network layer 3 (OSI) is the layer where the routing of packets actually takes place, wherein the layer 3 header of a data packet is not changed while routed through intermediate networks. As higher layers of a source and a destination are only "logically' connected, that is, there is no real connectivity, it is necessary for the packets to traverse the lower layers 2 and 1 to get physically delivered to the destination. Since different protocols are used in each network layer, each data packet passed from e.g. layer 3 to layer 2 has to be appropriately framed.

Accordingly, encapsulation of data packets is usually used to transmit data from an upper layer protocol via a lower layer protocol. For instance, the internet utilizes the IPv6 protocol, while most applications use either the User Data Protocol (UDP) or the Transmission Control Protocol (TCP) for data. Consequently, user data is encapsulated in a UDP datagram (layer 4), which is then encapsulated in an IP packet (layer 3). Sequentially, the IP packet, along with the encapsulated user data, may then be transmitted over the data link layer protocol (e.g. Ethernet, layer 2), which again entails an encapsulation.

Furthermore, encapsulation may also be used within a same layer in case one protocol of a particular layer is used for transporting a data packet encapsulated by another protocol of the same particular layer. A logical construct called a tunnel is established between the device that encapsulates and the device that decapsulates, wherein the process itself is referred to as tunneling. The tunneling may be used for transmitting data packets of one network protocol through a network (controlled by a different protocol) which would otherwise not support it. Tunneling may also be used to provide various types of Virtual Private Network (VPN) functionalities such as private addressing. For instance, there is the GPRS Tunneling Protocol (GTP), the Point-to-Point Tunneling Protocol (PPTP) or the IP security Protocol (lPsec). There exist two modes of IPsec operation. On the one hand the transport mode operation and on the other hand the tunnel mode operation. In transport mode, only the payload of the data packet is encrypted. It is fully routable since the IP header is sent as plain text. In tunnel mode, the entire IP packet is encrypted. It must then be encapsulated into a new IP packet for the routing process. Tunnel mode is used for nefinrork-to-network communications, i.e. for setting up secure tunnels between routers.

One of the most commonly used tunneling mechanism is the IP(layer 3)-in-IP(layer 3) encapsulation, which refers to the process of encapsulating an IP-datagram with another IP header and may be used e.g. for Mobile IP. Mobile IPv6 - also denoted MIPv6 - (see D. Johnson, C. Perkins, J. Arkko, "Mobility Support in IPv6", IETF RFC 3775, June 2004, available at http://www.ietf.org and incorporated herein by reference) is an IP-based mobility protocol that enables mobile nodes to move between subnets in a manner transparent for higher layers and applications, i.e. without breaking higher-layer connections. In other words, the mobile nodes remain reachable while moving around in the IPv6 internet network.

Usually, when a terminal powers on, it configures an IP address that is based on the IP address prefix of the access network. If a terminal is mobile, a so-called mobile node (MN), and moves between subnets with different IP prefix addresses, it must change its IP address to a topological correct address due to the hierarchical addressing scheme. However, since connections on higher-layers such as TCP connections are defined with the IP addresses (and ports) of the communicating nodes, the connection to the active IP sessions breaks if one of the nodes changes its IP address, e.g. due to movement. One possible protocol to address said problem is the MlPv6 protocol.

The main principle of MlPv6 is that a mobile node is always identified by its Home Address (HoA), regardless of its topological location in the internet, while a Care-of Address (CoA) of the mobile node provides information about the current topological location of the mobile node.

In more detail, a mobile node has two IP addresses configured: a Care-of Address and a Home Address. The mobile node's higher layers use the Home Address for communication with the communication partner (destination terminal), from now on mainly called Correspondent Node (CN). This address does not change and serves the purpose of identification of the mobile node. Topologically, it belongs to the Home Network (HN) of the mobile node. In contrast, the Care-of Address changes on every movement resulting in a subnet change and is used as the locator for the routing infrastructure. Topologically, it belongs to the network the mobile node is currently visiting. One out of a set of Home Agents (HA) located on the home link maintains a mapping of the mobile node's Care-of Address to the mobile node's Home Address and redirects incoming traffic for the mobile node to its current location. Reasons for deploying a set of home agents instead of a single home agent may be e.g. redundancy and load balancing.

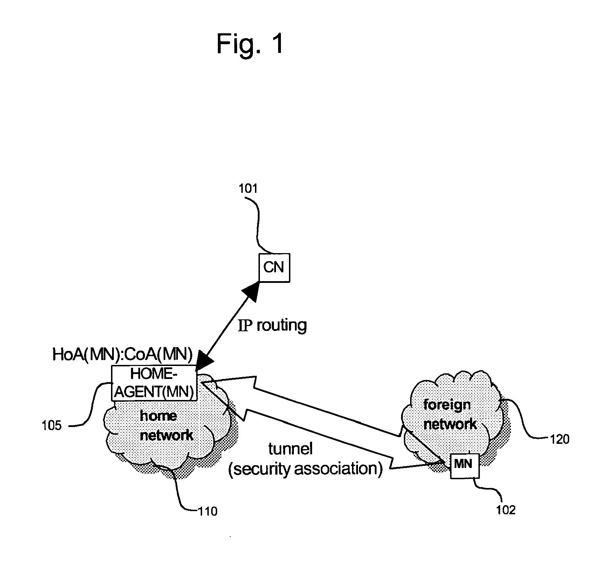

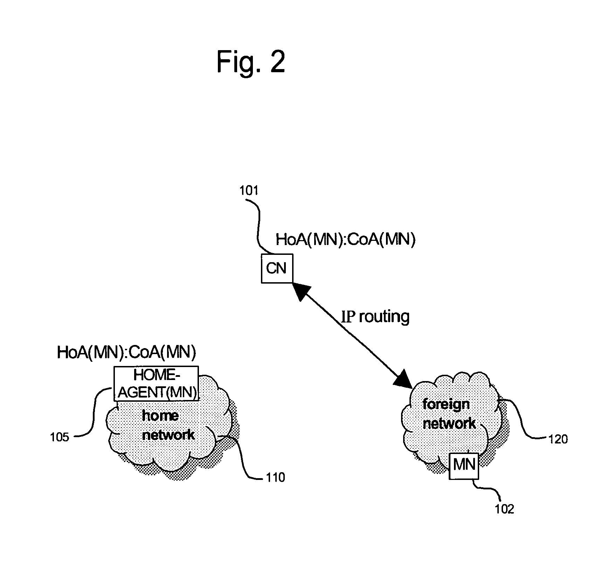

Mobile IPv6 currently defines two modes of operation, one of which is bi-directional tunneling (Fig. 1). The other mode is the route optimization mode (Fig. 2), which will be discussed later. In using bi-directional tunneling, data packets sent by the correspondent node 101 and addressed to the home address of the mobile node 102 are intercepted by the home agent 105 in the home network 110. IP-in-IP encapsulation is required because each data packet that is intercepted needs to be resent over the network to the Care-of Address of the MN 102. Accordingly, each intercepted data packet is included as the payload in a new IP data packet addressed to the CoA of the MN 102 and tunneled to the MN 102, which is located at the foreign network 120. The start of the corresponding tunnel is the Home Agent 105, which does the encapsulation and the end is the mobile node 102. It might also be possible that a local agent in the foreign network 120 receives messages on behalf of the mobile node, strips off the outer IP header and delivers the decapsulated data packet to the mobile node (not shown).

Data packets sent by the mobile node 102 are reverse tunneled to the home agent 105, which decapsulates the packets and sends them to the correspondent node 101. Reverse tunneling means that packets are tunneled by the mobile node to the home agent in a "reverse" manner to the "forward" tunnel.

Regarding this operation in MlPv6 only the Home Agent 105 is informed about the Care-of Address of the mobile node 102. Therefore, the mobile node sends Binding Update (BU) messages to the Home Agent. These messages are advantageously sent over an IPsec security association, and are thus authenticated and integrity protected.

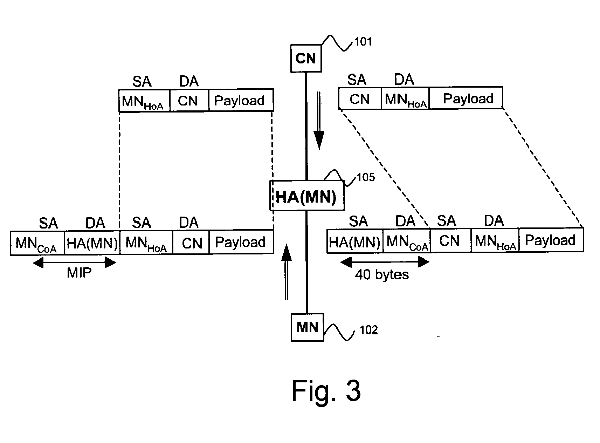

Fig. 3 shows a diagram of an exemplary data packet exchange between a CN 101 and a MN 102 via the Home Agent 111 of the MN 102, wherein the packet format during the communication is illustrated in detail. It is assumed that all communication between the CN and the MN is conducted via the MN's HA 111, that is, no route optimization has been performed. Consequently, the IP header of a data packet transmitted from the CN to the MN contains the Home Address of the MN as destination address, and the IP address of the CN as the source address. In accordance with the destination address of the packet being the Home Address of the MN, the data packet is routed to the Home Network, and then to the Home Agent of the MN.

As explained above, upon receiving the data packet, the HA applies the IP-in-IP encapsulation based on MlPv6 procedures and sends the encapsulated packet to the MN. In other words, the HA tunnels the received data packets to the MN by applying the IP-in-IP encapsulation. More specifically, the HA adds another IP header to the packet, comprising its own address as the source address, and the Care-of Address of the MN as the destination address of the additional header. As apparent from Fig. 3 this augments the packet size with another 40 bytes.

Similarly, data packets that are returned by the MN are encapsulated with two IP headers. The outer header relates to the tunneling of the data packet to the HA, and accordingly includes the address of the HA as the destination address, and the Care-of Address of the MN as the source address. The inner IP header includes the CN's address as the destination, and the MN's Home Address as the source address.

Therefore, each data packet of a communication session between a MN and a CN is augmented between the HA and the MN, this resulting in additional traffic in the corresponding network. This is especially disadvantageous in networks with limited data bandwidth capabilities, e.g. wireless networks.

### SUMMARY OF THE INVENTION

Therefore, in view of the above problems in the state of the art, one object of the invention is to improve the exchange of data packets between a mobile node and an intermediate node, in communication with a correspondent node.

More specifically, one object of the invention is to reduce the header size of data packets exchanged between a mobile node and a gateway, in communication with a correspondent node. The reduction of the header size of data packets is required to increase the throughput over the gateway that connects two different networks.

The object is solved by the subject-matter of the independent claims. Advantageous embodiments of the invention are subject-matters of the dependent claims.

One aspect of the invention is to reduce the IP header size of data packets by applying two different sorts of headers on certain data path sections. In particular, between the correspondent node and the gateway a non-route-optimized IP header is used. Between the gateway and the mobile node a route-optimized IP header is used. This may allow reducing the header size on the data path between gateway and the mobile node: only one route-optimized IP header may be necessary on said route section, compared to the two non-route-optimized IP headers that would otherwise be required.

Accordingly, another aspect of the invention relates to applying a route optimization process for establishing the different types of IP header. In particular, the gateway acts as the correspondent node and participates in the route optimization process, so that the correspondent node is not aware of the route optimization taking place. Consequently, the CN 101 still uses non-route-optimized IP headers to transmit data, while between the gateway and the MN 102 route-optimized IP headers are applied to the exchanged data packets.

A further aspect of the invention is to initiate and perform a second route optimization process for establishing the different types of IP header, after performing the first route optimization process. In particular, the mobile node initiates and performs the second route optimization process with the gateway acting as CN. One effect after completing both route optimization processes is the similarity of the source and destination addresses of the IPsec tunnel header and the usual IP header. This allows to considerably reduce the header of each data packet, by the gateway or the MN switching from IPsec tunnel mode to IPsec transport mode.

As a result, the CN 101 still uses non-route-optimized IP headers to transmit data, while the exchange of data packets between the gateway and the mobile node is carried out by using route-optimized IP headers entailing reduced overhead for the exchanged IP packets.

One embodiment of the invention provides a method for reducing the header size of data packets on a communication link between a mobile node and a gateway. The data packets are exchanged between the mobile node and a corresponding node via the gateway. The mobile node transmits data packets to the correspondent node by utilizing a route-optimized header, while the correspondent node transmits data packets to the mobile node by utilizing a non-route-optimized header. Then, the gateway converts the route-optimized header of the data packets from the mobile node into the non-route-optimized header, utilized by the correspondent node. Further, the gateway converts the non-route-optimized header of the data packets from the correspondent node into the route-optimized header, utilized by the mobile node.

According to another embodiment of the invention, a route-optimized header is obtained by performing a first route optimization process between the gateway and the mobile node, wherein the route optimization process is initiated and performed by the gateway on behalf of the correspondent node. Further, after finishing the first route optimization process, a second route optimization process is performed between the gateway, on behalf of the correspondent node, and the mobile node, wherein the second route optimization process is initiated by the mobile node. After finishing the second route optimization process, the gateway and mobile node establish a new security association for using IP security in transport mode which allows switching from using an additional security tunnel for exchanging the data packets between the gateway and the mobile node to attaching a security option field to a header of each data packet in order to enable the payload encryption. The attachment of a security option instead of using an additional security tunnel reduces the data packet overhead.

Another embodiment relates to the conversion of the non-route-optimized header, including an IP header and an IP tunnel encapsulation header, to the route-optimized header, including an IP header, an IP security option field and a first and a second route optimization header option. Hereby, the IP tunnel encapsulation header is removed from the non-route-optimized header. Further, the IP header of the non-route optimized header is substituted by a new IP header, and the first and second route optimization header options and the IP security option field are inserted in the non-route-optimized header.

A further embodiment relates to the conversion of the route-optimized header, including an IP header, an IP security option field and a first and a second route optimization header option, to the non-route-optimized header, including an IP header and an IP tunnel encapsulation header. Hereby, the first and second route optimization header option and the IP security option field are removed from the route-optimized header. Further, the IP header of the route-optimized header is substituted by a new IP header, and the IP tunnel encapsulation header is inserted in the route-optimized header.

One embodiment of the invention provides a gateway for reducing the header size of data packets. The data packets are exchanged between a mobile node and a corresponding node and all the data packets are exchanged via the gateway. A receiver of the gateway receives data packets incoming from the mobile node, wherein the data packets incoming from the mobile node comprise a route-optimized header. The receiver further receives data packets incoming from the correspondent node, wherein the data packets incoming from the correspondent node comprise a non-route-optimized header. A processor in the gateway then converts the route-optimized header of the data packets, incoming from the mobile node, into the non-route-optimized header. Accordingly, the processor further converts the non-route-optimized header of the data packets, incoming from the correspondent node, into the route-optimized header.

In a different embodiment of the invention, the gateway switches from using a security tunnel between the gateway and the mobile node to attaching a security option field to a header of each data packet, after the gateway receives a second binding update message of the second route optimization process and after a new security association between the gateway and the mobile node is established.

In another embodiment of the invention, the gateway converts the non-route-optimized header, including an IP header and an IP tunnel encapsulation header, to the route-optimized header, including an IP header, an IP security option field and a first and a second route optimization header option. A processor of the gateway removes an IP tunnel encapsulation header from the non-route-optimized header. The processor further substitutes an IP header of the non-route optimized header by a new IP header. The processor further inserts first and second route optimization header options and an IP security option field in the non-route-optimized header.

According to another embodiment of the invention, the gateway converts the route-optimized header, including an IP header, an IP security option field and a first and a second route optimization header option, to the non-route-optimized header, including an IP header and an IP tunnel encapsulation header. A processor of the gateway removes a first and second route optimization header option and the IP security option field from the route-optimized header. The processor further substitutes an IP header of the route-optimized header by a new IP header. The processor further inserts an IP tunnel encapsulation header in the route-optimized header.

In another embodiment of the invention, a mobile node exchanges data packets with a corresponding node via a home agent of the mobile node, and performs a second route optimization process with the corresponding node by using a second location dependent IP address of the mobile node as its source address for the second route optimization process.

In a different embodiment of the invention, the mobile node switches from using a security tunnel between the mobile node and the gateway to attaching a security option field to a header of each data packet, after transmitting a second binding update message of the second route optimization process to the gateway and after a new security association between the gateway and the mobile node is established.

### BRIEF DESCRIPTION OF THE FIGURES

In the following the invention is described in more detail in reference to the attached figures and drawings. Similar or corresponding details in the figures are marked with the same reference numerals.
- **Fig. 1**: exemplifies the use of bi-directional tunneling for a communication between a mobile node and a correspondent node according to MlPv6,
- **Fig. 2**: exemplifies the use of route optimization for a communication between a mobile node and a correspondent node according to MlPv6,
- **Fig. 3**: shows the data packet formats used during communication between a MN and a CN, when in bidirectional tunneling mode of MlPv6,
- **Fig. 4**: shows an illustration that confronts the respective data packet formats used for MlPv6 bidirectional tunneling mode and MlPv6 route optimization mode,
- Fig. 5: illustrates a signaling diagram for a route optimization procedure according to MlPv6 between the MN and the CN, and the packet formats of related messages,
- **Fig. 6**: depicts an overview of a simplified WLAN network model,
- **Fig. 7**: illustrates an interworking 3GPP-WLAN protocol stack and a data packet format used for communication,
- **Fig. 8**: illustrates the data packet formats used during communication when the MN is located in a WLAN scenario,
- **Fig. 9**: shows a signaling diagram and message format when performing a first route optimization by the gateway on behalf of the CN, according to one embodiment of the invention,
- **Fig. 10**: shows the data packet formats, after completing the first route optimization , according to one embodiment of the invention,
- **Fig. 11**: shows a signaling diagram and message format when performing a second route optimization by the MN 102, in which the route optimization messages are directly transmitted from the gateway 103 to the MN 102, according to another embodiment of the invention.
- **Fig. 12**: shows a signaling diagram and message format when performing a second route optimization by the MN 102, in which the route optimization messages transmitted from the gateway are transmitted via the HA(MN) 105 to the MN 102, according to one embodiment of the invention.
- **Fig. 13**: shows the data packet formats using the route-optimized header, after completing the second route optimization by the MN 102 and switching from IPsec tunnel mode to lPsec transport mode, according to the embodiment of the invention.

### DETAILED DESCRIPTION OF THE INVENTION

The following paragraphs will describe various embodiments of the invention. For exemplary purposes only, most of the embodiments are outlined in relation to a 3GPP-WLAN communication system according to the discussion in the Background Art section above and later on. It should be noted that the invention may be advantageously used for example in connection with a mobile communication system such as the 3GPP-WLAN communication system, but the invention is not limited to its use in this particular exemplary communication network.

The explanations given in the Technical Background section above are intended to better understand the mostly 3GPP specific exemplary embodiments described herein and should not be understood as limiting the invention to the described specific implementations of processes and functions in the mobile communication network. Nevertheless, the improvements proposed herein may be readily applied in the architectures/systems described in the Technological Background section and may in some embodiments of the invention also make use of standard and improved procedures of theses architectures/systems.

### Definitions

In the following a definition of several terms frequently used in this document will be provided.

**A mobile node** (MN) is a physical entity within a communication network. One node may have several functional entities. A functional entity refers to a software or hardware module that implements and/or offers a predetermined set of functions to other functional entities of a node or the network. Nodes may have one or more interfaces that attach the node to a communication facility or medium over which nodes can communicate. Similarly, a network entity may have a logical interface attaching the functional entity to a communication facility or medium over it may communicate with other functional entities or correspondent nodes.

**A home network** (i.e., the home link) of a mobile node is typically identified by the location of the home agent at which the mobile node registers its care-of address(es) for a given home address of the mobile node. A home address is an address assigned to a mobile node, used as the permanent address of the mobile node, and therefore location independent. This address has the prefix of the mobile node's home network. A care-of address is an address associated with a mobile node while visiting a foreign network, and thus dependent on the location. The prefix of the care-of address is typically equal to the prefix of the visited network. A mobile node may have one or more care-of addresses simultaneously.

A home agent (HA) is a router or a functional entity providing a routing function on a mobile node's home network with which the mobile node registers its current care-of address(es). The home agent acts as a mobility anchor point for the mobile node. While the mobile node is away from home, the home agent may provide mobility service to the mobile node e.g. by intercepting packets on the home link destined to the mobile node's home address, encapsulating them, and thus tunneling them to one of or a some of the mobile node's registered care-of address(es).

**A route-optimized header** is a header of a first sort, being different from the type of non-route-optimized header. In one embodiment of the invention these two type of headers are differentiated by whether at least one route optimization (RO) has been performed previously or not. That is, a route-optimized header type is usually utilized after a RO has been conducted, while a non-route-optimized header type is used in case no RO took place.

A **gateway** is an intermediate node, representing a physical entity within a communication network. In particular, the gateway is a router located between a mobile node and the home agent of the mobile node. In one embodiment of the invention, the gateway may represent the intersection between a 3GPP network and a WLAN network. It is advantageous, if the gateway and the home agent are realized in two separate entities. One node may have several functional entities. A functional entity refers to a software or hardware module that implements and/or offers a predetermined set of functions to other functional entities of a node or the network. Nodes may have one or more interfaces that attach the node to a communication facility or medium over which nodes can communicate. Similarly, a network entity may have a logical interface attaching the functional entity to a communication facility or medium over it may communicate with other functional entities or correspondent nodes.

An IP encapsulation **header** denotes a header used for transmitting data packets via an IP tunnel. This header encapsulates the payload and the original IP header of the payload. An IP encapsulation header can also be an IP encapsulating header.

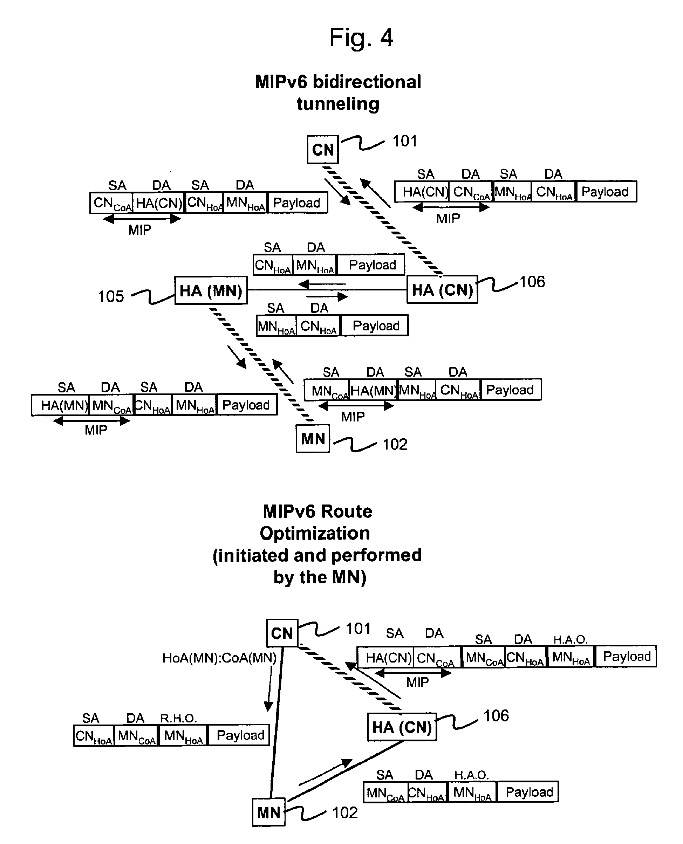

A comparison between the two modes of operation in MlPv6 concerning the packet headers is shown in Fig. 4. On the upper part of Fig. 4, the IP-in-IP encapsulation applied by the HAs 105 and 106 is illustrated as already discussed in previous paragraphs. On the lower part of Fig. 4, a route optimized route is used between the CN 101 and the MN 102, after a RO process has been initiated and performed by the MN 102. As a result of the RO, the CN 101 transmits data packets directly from its CoA to the CoA of the MN 102 by eliminating the detour via the HAs 105 and 106 and thus avoiding the IP-in-IP encapsulation. Instead, a Route Optimization Header Option (R.H.O.) is inserted by the correspondent node comprising the Home Address of the MN 102, which denotes the target receiving application address. The-R.H.O. contains the MN's IP address (HoA), which is used by the application (e.g. HTTP) to transmit packets to the CN. Therefore, after the MN receives the packets, it can derive to which application this packet is belonging based on the R.H.O.'s address. In correspondence therewith, the MN transmits data packets to the CN via the HA(CN), wherein it uses its CoA as source address, and inserts its HoA in a Home Address Option (H.A.O.) field, thereby indicating to the CN which is the sending application address.

The IP headers used in the route optimization mode are smaller in size compared to the IP-in-IP header of the bidirectional tunneling mode and thereby the traffic load in the network of the MN 102 is reduced. For instance, the R.H.O. field is 24 bytes and the H.A.O. field is 20 bytes in size, whereas the additional IP header used by MIP has 40 bytes. Therefore, it is obvious that apart from optimizing the data route between the MN and the CN, the route optimization procedure is able to significantly reduce the header size of a data packet compared to the non-route optimized mode.

However, one of the drawbacks from inserting routing header options in the data packets is that the traffic in the network of the CN 101 is increased compared to the bidirectional tunneling, as apparent from Fig. 4. Each data packet comprises an additional routing option field, be it H.A.O. with 20 bytes for uplink data packets, or R.H.O. with 24 bytes for downlink data packets. Furthermore, the HA(MN) 105 is bypassed during the communication in the downlink direction from the CN 101 to the MN 102 after RO is performed, which may not be allowed for certain appliances and services. For instance, the operator needs to keep control over the entire traffic due to accounting or security reasons, that is, all data needs to be transferred via the HA(MN) 105. Still another disadvantage is that signaling traffic to/from the CN 101 is generated by the actual RO procedure. Furthermore, the CN 101 may derive the MN's physical location as the CoA, within the data packets, is location-dependent, which naturally impacts the MN's location privacy.

The embodiment of the invention leverages the advantage of reducing the packet header size, while avoiding the negative effects entailing usual RO.

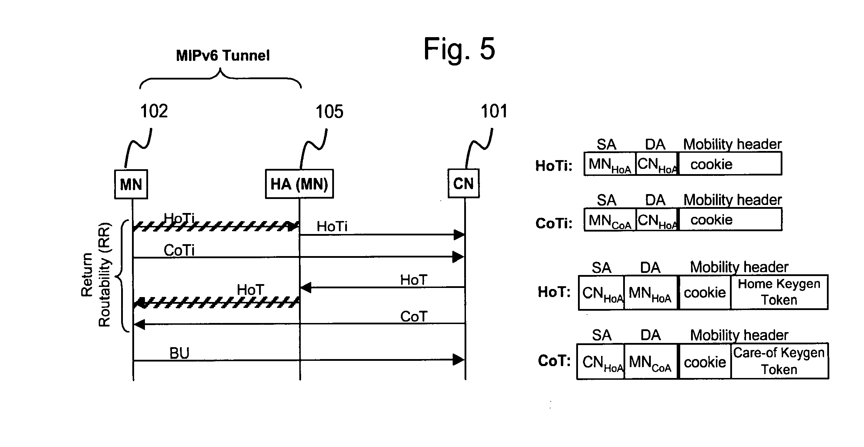

Fig. 5 depicts the signaling flow performed for RO in MlPv6, and the packet formats of most messages used therein. The protection of Binding Updates sent to correspondent nodes does not require the configuration of security associations or the existence of an authentication infrastructure between the mobile node and correspondent node. Instead, a method called the Return Routability Procedure is used to assure that the right mobile node is sending the message.

The Return Routability Procedure enables the correspondent node to obtain some reasonable assurance that the mobile node is in fact addressable at its claimed Care-of Address as well as at its Home Address. Only with this assurance is the correspondent node able to accept Binding Updates from the mobile node which would then instruct the correspondent node to direct that mobile node's data traffic to its claimed Care-of Address.

This is done by testing whether packets addressed to the two claimed addresses are routed to the mobile node. The mobile node can pass the test only if it is able to supply proof that it received certain data (the "keygen tokens") which the correspondent node sends to those addresses. These data are combined by the mobile node into a binding management key. The integrity and authenticity of the Binding Update messages to correspondent nodes is protected by using the binding management key.

More specifically, the MN sends two messages to the CN 101, each however over a different route. One message - Home Test Init (HoTi) message - is sent to the HA over the MIP IP-in-IP tunnel, which in turn forwards the message to the CN 101. A mobile node sends a Home Test Init message to the correspondent node (via the home agent) to acquire the home keygen token. As apparent from Fig. 5, the message comprises the home init cookie that the CN 101 must return later, and conveys the Home Address of the MN 102 to the CN. The other message - Care-of Test Init (CoTi) - is sent directly to the CN 101 in order to obtain the care-of keygen token. The CoTi message informs the CN 101 about the current Care-of Address of the MN, and comprises the care-of-init cookie.

After receiving the HoTi and CoTi messages, the CN 101 sends two messages back to the MN 102, again over different routes. The Home Test (HoT) message is sent to the MN's HoA, i.e. to the HA 105, in response to the HoTi message. The HA 105 then sends the message to the MN 102 over the MIPv6 tunnel. Correspondingly, the Care-of Test (CoT) message is sent directly to the MN 102. Both messages HoT and CoT respectively contain "home keygen token" and "care-of keygen token", respectively along with the home init cookie and the care-of-init cookie received from the previous HoTi and CoTi messages. Both tokens are based on CN's currently active secret key, nonces, and Home or Care-of Address.

After the HoT and CoT messages arrive at the MN, the MN uses their keygen tokens and generates a binding management key from the tokens received with the HoT and CoT messages. After the mobile node has created the binding management key, it can supply a verifiable Binding Update to the correspondent node. After receiving the Binding Update message, the CN 101 can update its binding cache with the binding of MN's HoA and CoA, and is enabled to transmit data packets directly to the MN 102.

Thus, MlPv6 allows to optimize the route between the CN 101 and the MN 102 by establishing a mapping in the CN 101 of the HoA and CoA of the MN 102.

Referring back to the bottom of Fig. 4, in the route optimization mode the MN 102 sends data packets first to the HA(CN) 106 by using the MN's Care-of Address as the source address, and by including the MN's Home Address in a special lPv6 route optimization header option defined for MIPv6. The HA(CN) 106 encapsulates and transmits the data packets via a MlPv6 tunnel to the CN 101. Accordingly, the CN 101 sends data directly to the MN 102, by using the MN's Care-of Address in the destination address field, and by including the MN's Home Address in a special IPv6 route optimization header option defined for MlPv6.

In the following, an exemplary network architecture is presented to which the various embodiments of the invention may be applied.

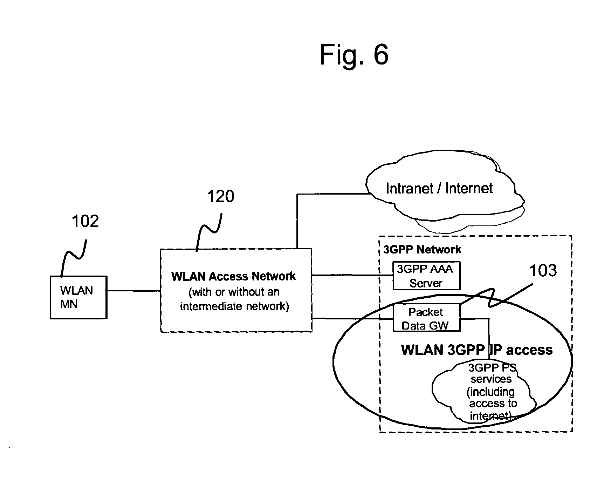

Fig. 6 depicts a simplified overview of the I-WLAN architecture, wherein the Packet Data Gateway (PDG) 103 supports WLAN 3GPP IP access to External IP network. In addition, the WLAN includes WLAN access points and intermediate AAA (authentication, authorization and accounting) elements. It may further include other devices such as routers. The WLAN capable MN comprises all equipment that is in possession of an end user, such as a computer, WLAN radio interface adapter etc. A MN attached to the WLAN may either access directly the Internet (referred to as direct IP access) or may connect to its 3GPP operator and use operator's services. Since the operator normally wants to keep control of the MN's traffic, it is usual that the MN accesses the data services over the 3GPP operator, i.e. through the PDG.

When a mobile node attaches to a WLAN, the MN configures a local IP address (MN_{LA}) in the WLAN network, and establishes an IPsec tunnel to the PDG using the configured MN_{LA}. This MN_{LA} is not used for communication with correspondent nodes, rather this is the address that the MN uses only in the WLAN network and for communication with the PDG. After the MN establishes the IPsec tunnel (security association, etc.) with the PDG, the MN configures a remote IP address based on the PDG's IP prefix. Said remote IP address is used as new CoA of the MN when the MN communicates with the HA. Afterwards, the MN needs to perform MIP procedures to register the CoA (remote IP address from PDG's network) with its HA. Only in doing so, the MN can continue using its original Home IP Address, which has been used to start the service in the 3GPP network before the handover to the WLAN network.Therefore, the MN sends/receives data packets to/from the CN over the established MlPv6 tunnel between itself and its HA. In case of I-WLAN, the HA may be implemented in the SAE (System Architecture Evolution) anchor.

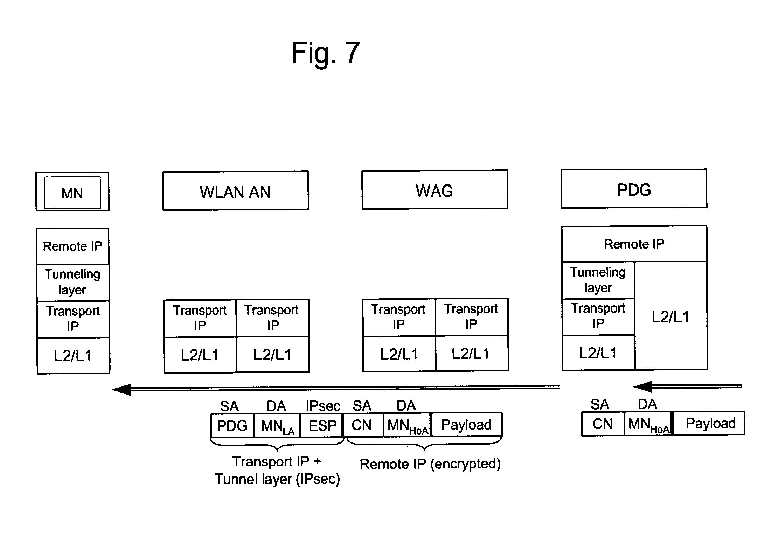

Fig. 7 illustrates the protocol stack of the I-WLAN architecture. In this respect, Fig. 7 also shows WLAN Access Network (AN) and WLAN Access Gateway (WAG), which however are not important for the invention, and will thus not be further discussed. The remote IP layer of the MN is used by the MN to be addressed in the external packet data networks, wherein the MN's remote IP address is utilized for communication with an external entity. At the bottom of Fig. 7 a data packet transmitted from the CN is depicted on its way to the MN, wherein the header formats are illustrated in detail. As apparent, the PDG processes the remote IP packets without modifying them, however, the Tunneling layer encapsulates the remote IP packet within a tunneling header, which allows end-to-end tunneling between the MN and the PDG. Further, the transport IP layer allows the intermediate entities/network and the WLAN access network to transport the remote IP layer packets, wherein the MN is addressed in this layer by its local IP address. The tunneling layer together with the transport layer may be implemented by the IPsec protocol in tunnel mode.

Generally, IPsec provides security services at the IP layer for other protocols and applications in order for them to communicate securely. That is, IPsec sets up a secure path between two communicating nodes over insecure intermediate systems. In this respect, IPsec is composed of several components to provide security service, wherein the two main ones are the Authentication Header (AH) protocol and the Encapsulating Security Payload (ESP) protocol. They provide authenticity and privacy to IP data by adding particular headers to the IP data packet.

Referring to Fig. 7 again, the original data packets are encapsulated within an IPsec header, with the MN's local address (MN_{LA}) as the destination address, the PDG's address as the source address, and including the Encapsulating Security Payload (ESP, 8 bytes in length) within a corresponding option field. The payload of the new encapsulated packet, i.e. the original data packet, is encrypted. Furthermore, the ESP provides origin authenticity, integrity and confidentiality of the data packets, while the packet overhead added by the IPsec tunnel sums up to 48 bytes.

Though the following embodiment of the invention is restricted to a 3GPP-WLAN architecture, other access technologies in the MN's network are possible, and the mechanism of the invention may be appropriately applied thereto, as well. Other access technologies that are possible are for example the WIMAX (Worldwide Interoperability for Microwave Access).

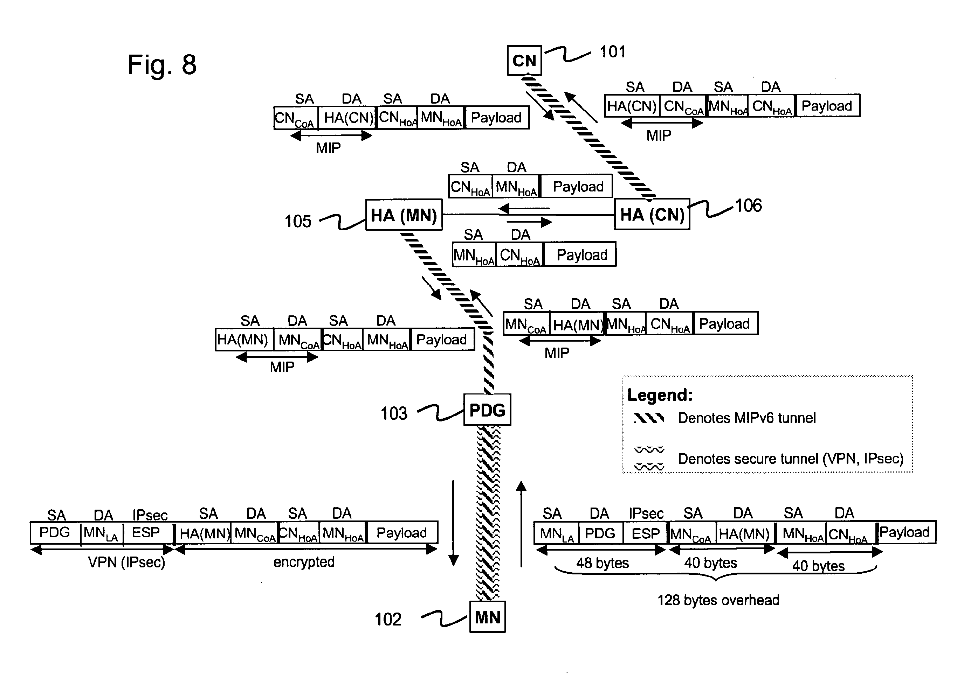

Fig. 8 shows a communication system, in which the mobile node is located in a Wireless Local Area Network (WLANs) 120, wherein a packet data gateway (PDG) 103 enables the MN 102 to access external IP networks from the WLAN. As discussed above, it is further assumed that an IPsec tunnel is utilized for security purposes between the PDG 103 and the MN 102. In detail, all data packets and signaling messages exchanged between the MN and the PDG are flowing over this IPsec tunnel.

Usual communication between the CN 101 and the MN 102 is depicted in the downlink and uplink with detailed illustrations of the employed headers of the exchanged data packets. In particular, referring to the downlink from the CN 101, the original data packet contains an IP header, wherein the CN's HoA is the source address and the MN's HoA is used as destination address. Accordingly, the data packet is routed to the HA(CN) 106, via an MlPv6 tunnel, which may be integrated as a function in one particular SAE of the Home Network. However, it should be noted that the HA(CN)106 could be a separate entity in the Home Network, as well, or implemented in a different entity. In the downlink from the HA(CN) to the HA(MN), the data packets are not exchanged via an MlPv6 tunnel, rather the data packets are routed according to their destination address.

In compliance with the general MlPv6 procedure, the HA(MN) then encapsulates the original data packet from the CN 101 as payload with an additional IP header, comprising its own address as the source address, and the Care-of Address of the MN as the destination address. This IP-in-IP encapsulation adds another 40 bytes to the data packet. Since the MN's CoA is based on the PDG's IP prefix, the data packet arrives at the PDG 103, which provides access to the WLAN 120 to which the MN 102 is connected. As the PDG 103 is one end of the IPsec tunnel, the PDG encapsulates the received data packet from the HA(MN) within an IPsec header construct and encrypts the payload, which actually now is the entire received data packet. More specifically, the IPsec header generated by the PDG comprises the PDG's address as the source address, the MN's local address as the destination address in the local network, and adds an ESP in a corresponding header field. This IPsec tunneling adds another 48 bytes to the packet, which together with IP-in-IP tunneling and the usual IP header amounts to an overhead of 128 bytes in total.

Correspondingly, data packets transmitted from the MN 102 are encapsulated threefold: the IPsec header, the IP-in-IP header and the usual IP header. Accordingly, the data packets are decapsulated on its way to the CN 101, namely, the IPsec header is stripped off at the PDG, as the PDG is the end of the IPsec tunnel. The PDG forwards the packets to the HA(MN), wherein the IP-in-IP header is removed at the HA(MN), which then forwards the data packets in the direction of the HA(CN). Then, the HA(CN) applies MlPv6 encapsulation to the data packets for the transmission via an MIPv6 tunnel to the CN 101.

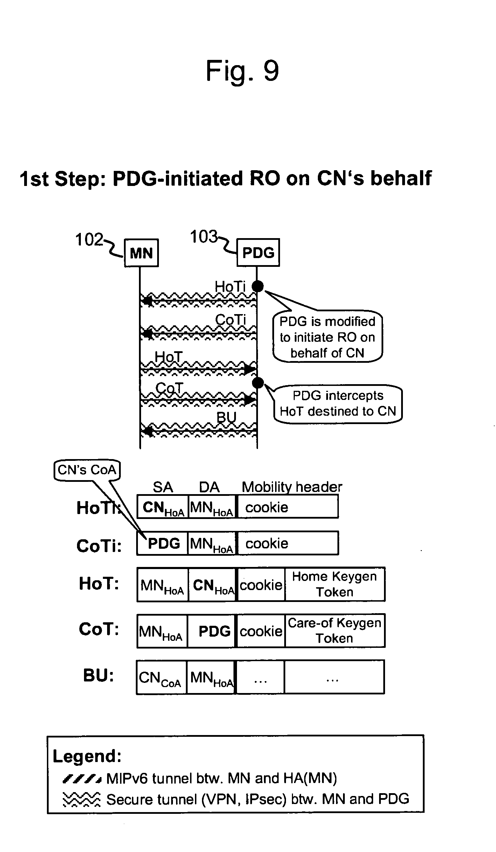

Fig. 9 shows the signaling flow and message structure of a modified RO process. In particular, Fig. 9 represents a first route optimization process respectively procedure according to one embodiment of the invention. This first route optimization process is also referred to as first step.

Between the MN and the PDG (gateway) a security tunnel based on IPsec is established and all data packets and signaling messages are flowing over this tunnel. This IPsec encapsulation is shown in the signaling flow diagrams by corrugated lines, however, the IPsec header are not shown in the message formats underneath the signaling flow diagrams. The message format only shows the actual RO messages with the IP header. After the MN is attached to WLAN access network, the PDG initiates as a first step a route optimization procedure with the MN pretending that the CN's new CoA is the PDG's IP address. Thus, the PDG 103 acts on behalf of the CN 101 without notifying the CN 101. The PDG may learn the IP addresses of the CN's which are communicating with the MN 102 by contacting a policy server or application server like Session Initiation Protocol (SIP) server or some other entity in the core network that has knowledge about the communication partners of the MN.

Correspondingly, the PDG generates a HoTi message of the first route optimization process having as source address the CN's HoA address and the MN's HoA as destination address. Further, the PDG generates a CoTi message of the first route optimization process to the MN 102 having as source address the PDG's IP address itself to be accepted by the MN as the CN's CoA, and as destination address the MN's HoA. Both, the HoTi and CoTi messages may be seen as initiating messages of the route optimization process. Then, HoTi and CoTi are both sent to MN 102. The MN 102 replies correspondingly with a HoT and CoT message. The CoT message is directed to the PDG 103, however, the HoT message is directed to the CN's HoA. Therefore the PDG 103 should monitor the data communication between the MN 102 and the CN 101 and intercept the HoT message from the MN 102, which is a reply to the HoTi message generated and sent by the PDG 103.

As in a route optimization process the HoTi and HoT messages are transmitted over a tunnel, the PDG 103 might not be able to monitor encrypted messages in the established tunnel between the MN and the CN 101. Thus, the PDG won't be able to detect the HoT message destined to the CN's HoA. In such a case, it would be necessary for the PDG 103 to transmit the first initiating message of the first route optimization process (HoTi) directly to the MN's CoA. In return thereto, the MN would reply with a first reply message of the first route optimization process (HoT) that can now be monitored and intercepted by the PDG 103. In order to not send the HoT message via an MIP tunnel, the MN 102 is able to recognize that the HoTi message was not received via an MIP tunnel. This behaviour of the MN 102 may be activated by the PDG 103 during network attachment procedure of the MN 102. That is, the functionality of transmitting a HoT message not via an MIP tunnel must first be requested by the PDG 103 during the network attachment of the MN 102. This measure avoids security-threats used by attackers to intercept messages not sent via an MIP tunnel.

After the PDG 103 has received both, the HoT message and the CoT message, it generates and transmits a binding update message (BU) to the MN 102. The BU message includes as source address the CN's CoA and as destination address the MN's HoA.

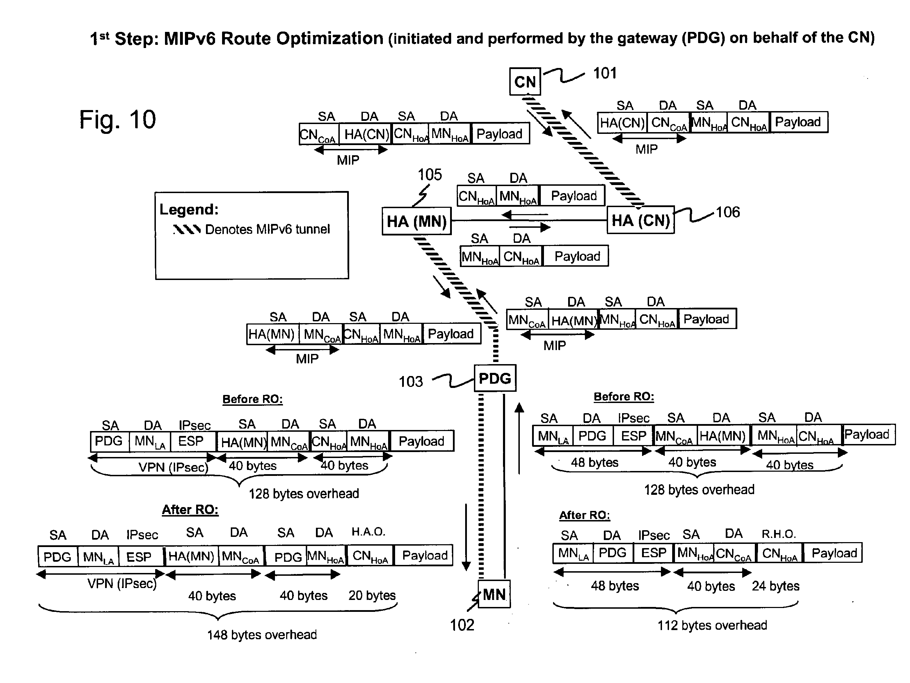

Fig. 10 shows the data packet formats, after completing the first route optimization process by the gateway 103 acting on behalf of the CN 101. After the first step is completed, the MN 102 sends data packets in the uplink direction directly to the CN's CoA, which is the PDG 103. The MN 102 uses a route-optimized header for the data packets which includes, apart from the usual IP header, the CN's CoA (destination address of the previous IP header) as route optimization header option, which will be the R.H.O. The previous MIP header is removed. Further, the data packets are transmitted by using IPsec tunnel mode. As shown in Fig. 10, in the uplink direction, the data exchange between the MN 102 and the PDG 103 is performed by using a reduced overhead for the data packets compared to the overhead before performing RO. Upon the encrypted data packets passing the PDG 103, it restores the original packets header as if no RO has been performed and sends the packets further to the CN 101.

In the downlink direction, the PDG 103 also includes to the overhead of the data packets (MIP header and IP header) the source address of the IP header as a route optimization header option, which will be the H.A.O. Further, the PDG 103 inserts in the usual IP header it's own IP address as source address and transmits the data packets with the route-optimized header via IPsec tunnel mode and via an MIP tunnel to the MN 102. That is, the PDG 103 modifies the data packets received from the HA(MN) 105 as if The CN performed in the RO and the CN's CoA is the PDG's IP address.

The data exchange between the MN 102 and the PDG 103 is performed by using an IPsec tunnel which is not illustrated in Fig. 10 to enhance readability.

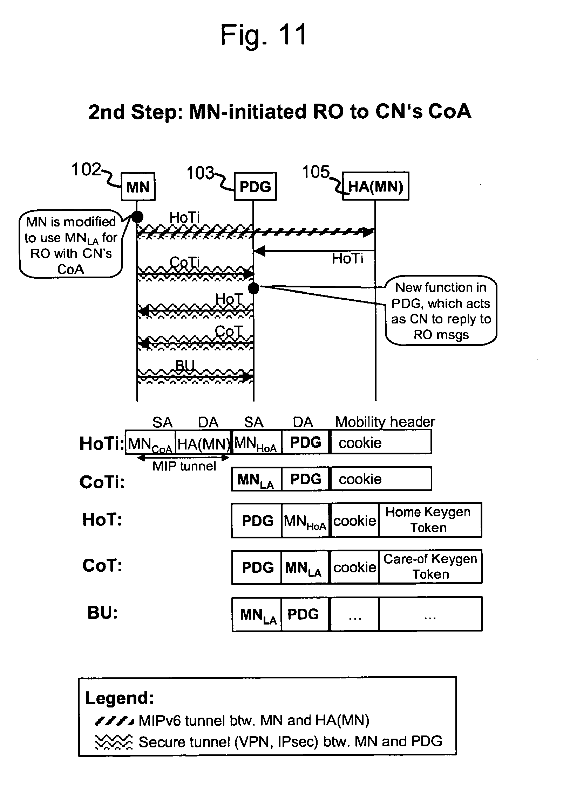

Fig. 11 shows a signaling diagram and message format when performing a second route optimization by the MN 102, according to another embodiment of the invention in which the route optimization messages are directly transmitted by the gateway 103 to the MN 102. In particular, Fig. 11 represents a second route optimization process respectively procedure according to one embodiment of the invention. This second route optimization process is also referred to as second step.

Between the MN 102 and the PDG 103 (gateway) a security tunnel based on IPsec is established and all data packets and signaling messages are flowing over this tunnel. This IPsec encapsulation is shown in the signaling flow diagrams by corrugated lines, however, the IPsec header are not shown in the message formats underneath the signaling flow diagrams. The message format only shows the actual RO messages with the IP header. Between the MN 102 and the HA(MN) 105, an MlPv6 tunnel is established.

After the first route optimization process, as discussed in Fig. 9 and Fig. 10, is completed, the MN 102 registers its local IP address (MN_{LA}) with the CN 101. That is, it performs the second RO. The MN obtains its MN_{LA} address from the non-3GPP access network, for instance the WLAN, and uses it as it's new CoA.

A modification to the MN 102 is required in order to use the obtained MN_{LA} as CoA for the MN in the 3GPP network. Another modification is that the MN 102 advantageously uses the CN's CoA to perform the second route optimization. Normally it is not specified whether the MN 102 shall use the CN's HoA or CoA, however for the purpose of this invention it is required that the MN 102 uses the CN's CoA.

According to the second step, illustrated in Fig. 11, the MN 102 generates a HoTi message with the IP address of the PDG as destination address, which is known to the MN 102 as the CN's CoA due to the first route optimization process. The HoTi message is first MIP encapsulated by the MN 102 and then transmitted in an MlPv6 tunnel to the HA(MN) 105. The HA(MN) 105 receives the HoTi message, removes the MlPv6 header and routes the HoTi message towards the PDG 103, as the destination address (CN's CoA) is the PDG 103. After the PDG 103 receives the HoTi message, it generates a HoT message as a reply message.

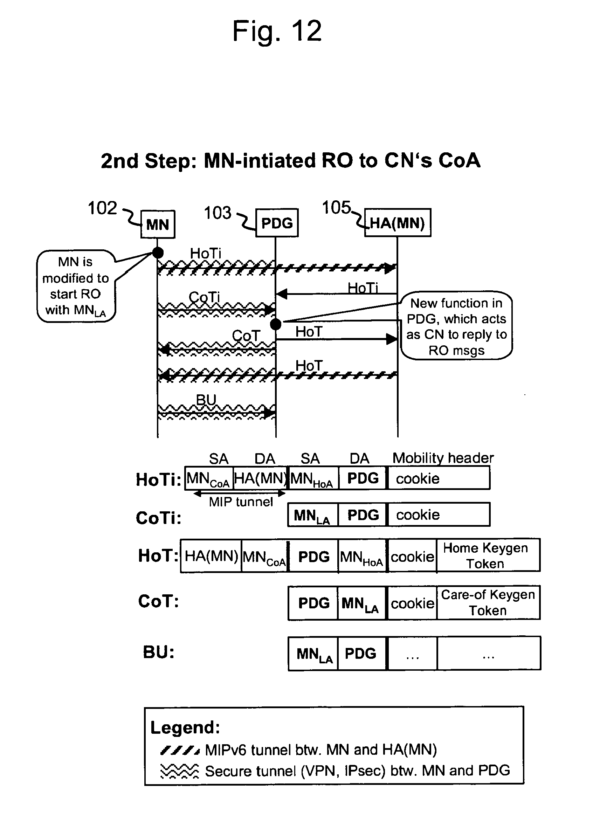

There are two options how the PDG 103 sends the HoT message to the MN 102:
1. In the normal case, the MN 102 expects to receive the HoT message over an MiPv6 tunnel from the HA(MN) 105. However, if the MN 102 is modified to accept the HoT not coming from the HA(MN) 105, then the PDG 103 may send the HoT directly to the MN 102, which is depicted in Fig. 11.
2. However, Fig. 12 illustrates the signaling flow, in particular the HoT message, if the MN 102 must receive the HoT message via an MlPv6 tunnel from the HA(MN) 105. In such a case, the PDG 103 needs to first send the HoT to the HA(MN) 105. Since the destination address of the HoT message is the MN's HoA, the HoT would be natively routed to the HA(MN) 105 because the MN's HoA is anchored at the HA(MN) 105 (SAE anchor). The HA(MN) then needs to process the HoT message as usual, i.e. the HoT message is tunneled over MIPv6 tunnel to the MN 102, as shown in Fig. 12.

According to the second route optimization process, the MN 102 also sends a CoTi message to CN's CoA (which is the PDG 103) over the secure tunnel to the PDG 103. The PDG 103 receives the CoTi message and replies with a CoT message while acting as the CN 101. After the MN 102 receives both HoT and CoT messages, it generates a binding update message BU and sends it to the PDG 103.

Alternatively, for initiating the second route optimization, the MN 102 may also generate a HoTi message with the CN's HoA as destination address. In contrast to using the CN's CoA as destination address for the HoTi message of the second RO, using by the MN the CN's HoA to send the HoTi message over the MIPv6 tunnel needs some modifications for the HA(MN) 105. Since MlPv6 tunnel is terminated at the HA(MN) 105, the HA(MN) may be modified to intercept the HoTi message and to tunnel it to the PDG. Further, the MN sends the CoTi message to the CN's HoA as well, but since the message always flow through the IPsec tunnel to the PDG, the PDG intercepts the CoTi. Then, the PDG generates a HoT message with the CN's HoA as source address and sends it first via a tunnel to the HA(MN). The HA(MN) then encapsulates the HoT message in an MlPv6 tunnel and transmits it to the MN. The PDG generates a CoT message having the CN's HoA as source address and sends it directly to the MN. After receiving both, the HoT and CoT messages, the MN generates a binding update and sends the BU to the CN's HoA, which will be intercepted by the PDG.

After the gateway 103 receives the binding update message by the MN 102 which indicates the completion of the second route optimization process, the gateway 103 establishes a mapping entry in an internal database. This mapping entry includes the information that data packets incoming from the MN 102, to which the first and second route optimization procedures have been applied, have to be encapsulated into an MlPv6 tunnel to a given HA(MN) 105. This data packets have an outer MlPv6 tunnel header containing the IP address of the HA(MN) 105 as destination address and the MN's CoA as source address. For example, a mapping entry may include the MN_{LA} address which corresponds to the IP address of the HA(MN) 105 and MN's CoA. This mapping entry in the gateway 105 is required as the gateway 103 may be connected to multiple home agents and the gateway 103 should know which MN 102 is connected to which home agent and in particular which is the MN's CoA. Further, the mapping entries enable the whole route optimization processes to remain transparent to the CN 101 and the HA(MN) 105.

As mentioned above, the two route optimization steps involve the deletion of the MIP header while two route optimization header options (R.H.O. and H.A.O.) are inserted. For example, in the downlink direction, the new overhead of a respective data packet includes as source address the IP address of the PDG 103 and the MN_{LA} address as destination address and additionally the two route optimization header options R.H.O. and H.A.O.

After the second route optimization process is completed, the data packets are still transmitted between the PDG and the MN over the IPsec tunnel. By performing the two ROs, the IPsec tunnel header includes the same source and destination address as the IP header. Thus, if on the data path between the PDG and the MN, now the IPsec mode would be switched from IPsec tunnel mode to IPsec transport mode, advantage could be taken of only using one of the two headers with the same source and destination addresses. Hence, using a new established IP security association in transport mode between the PDG and the MN that substitutes the initial IPsec tunnel, comes along with an advantageous and considerable data packet overhead reduction.

Then, after substituting the IPsec tunnel mode by IPsec transport mode involves the new data packet overhead merely consisting of an IP header, the two route optimization header options R.H.O. and H.A.O. and the ESP field.

Generally, transport mode security association (SA) is typically employed between a pair of hosts to provide end-to-end security service. In case that security is desired between intermediate systems (or between a host and intermediate system) mostly IP sec in tunnel mode is deployed. It is proposed that the MN 102 and PDG 103 establish IPsec SA in transport mode based on two reasons. On the one hand, the communication between the MN. 102 and the PDG 103 is seen as an end-to-end communication from the MN's perspective, and on the other hand the reduction of the header size over the wireless link is targeted.

The setup of the transport mode SA may be initiated either by the PDG 103 or by the MN 102 because both entities see each other as end-to-end communication parties. However, the setup of the IPsec SA in tunnel mode is preferably performed by the PDG 103, because this requires less changes to the MN 102. If IPsec SA in transport mode is used by an intermediate entity (e.g. in this case PDG 103), it is advantageous, if the source address of outbound packets (sent from the intermediate system, e.g. in downlink to the MN 102) and the destination address of the inbound packets (received in the intermediate system, e.g. in uplink from the MN 102) is an address belonging to the intermediate system itself. This condition is fulfilled for the PDG 103 after both route optimization have been completed.

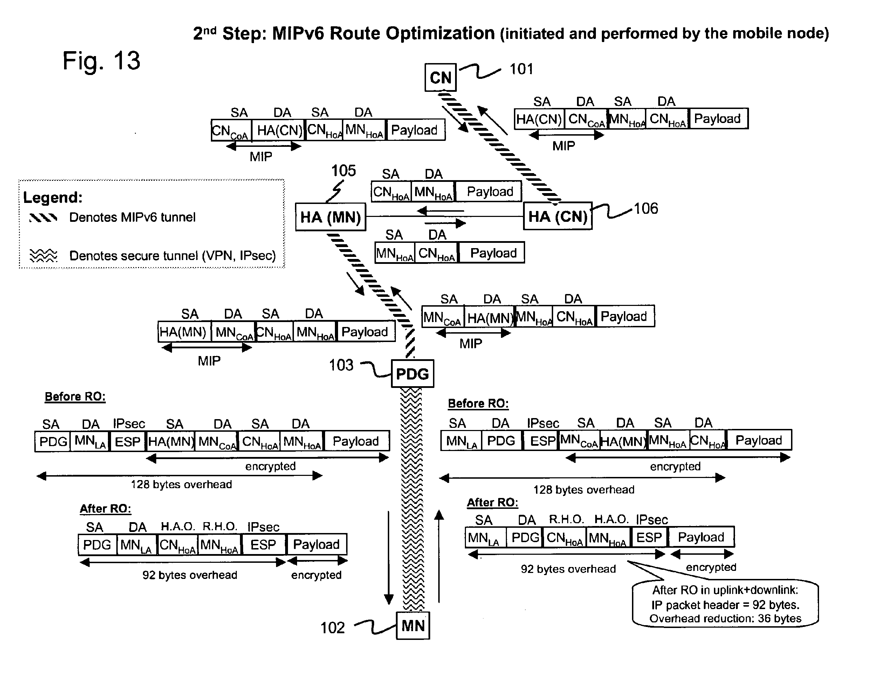

Next, as illustrated by Fig. 13, the modification of the data packets in the downlink and uplink direction will be described, performed by the PDG which acts as transition entity after both ROs are completed and the IPsec mode is used.

In the downlink direction, the MIP tunnel header is removed from the non-route-optimized header by the PDG due to performing both ROs and two route optimization headers are inserted. The route optimization header option H.A.O. has 20 bytes length and indicates the correct sending IP address to the receiver and is the source address of the IP header of the non-route optimized header in the data path between the HA(MN) and the PDG. The route optimization header option R.H.O. has 24 bytes length and is used for the receiver to recognize the correct port number of the application and is the destination address of the IP header of the non-route optimized header in the data path between the HA(MN) and the PDG. Further, the destination address of the IP header is the MN_{LA} address and the source address is the IP address of the PDG. Then, IPsec transport mode is applied between the PDG and the MN as mentioned above which results in an additional ESP header field.

In the uplink direction, the PDG receives the data packets with the overhead including the IP header, the two route optimization header options H.A.O. and R.H.O and the ESP header field. After receiving, the PDG converts the route-optimized header to the non-route-optimized header by removing the two route optimization header options H.A.O. and R.H.O and the ESP header field. Further, the PDG transmits the data packets via an MIP tunnel in the uplink direction with the MN'S CoA as source address of the MIP tunnel header and the IP address of the HA(MN) as destination address. Consequently, the PDG needs to modify the overhead of the data packets, so that the route optimizations respectively overhead reduction is transparent to the HA(MN) and to the CN. This means that the format of the packets on the data path between the PDG and the HA(MN) are the same as before the ROs. Thus, the route optimization processes are hidden from the CN.

Fig. 13 also shows the data packet formats before the two route optimization processes have been performed. The data packet overhead includes a usual IP header, an MIP header and an IPsec tunnel header.

In summary, by applying the ROs according to the embodiment of the invention, it is possible to achieve a significant reduction of the data packets overhead. If considered the data transmission between the PDG 103 and the MN 102 without performing any route optimization according to any embodiment of the invention, three headers would be required. In particular, these headers would be the usual IP header, the MIPv6 header and the IPsec header. If considering both ROs and the switching from IPsec tunnel mode to IPsec transport mode, only one IP header is required together with both route optimization header options between the PDG 103 and the MN 102.

As shown in Fig. 13, in uplink and downlink direction, the overhead reduction is symmetrical and equal to 36 bytes per packet. As shown in the figure, the whole overhead of a data packet before the ROs are performed, is 128 bytes (48 bytes IPsec header + 40 bytes MIP tunnel header + 40 bytes from the original IP header). After both ROs have been performed and the IPsec tunnel mode has been changed to IPsec transport mode, the whole overhead of a data packet is 92 bytes (40 bytes IP header + 24 bytes R.H.O. + 20 bytes H.A.O. + 8 bytes ESP option field).

This considerable overhead reduction is a result of the route optimization procedures together with switching from IPsec tunnel to IPsec transport mode. These modified route optimization processes may mainly performed in the PDG. However, the implementation of the embodiment does not require changes to the return routability signaling of the route optimization procedure as described in the technical background of the invention.

The new data packet overhead as shown in Fig. 13 denotes the route optimized header, according to the embodiment of the invention, which will be used for the data packet transmission between the MN 102 and the PDG 103 in both directions. Also shown are the parts of the data packets which are encrypted before and after the route optimization processes. After both ROs have been performed, for the transmission of data packets between the PDG 103 and the MN 102, only the data payload is encrypted in the IPsec transport mode.

In summary, the PDG 103 should have information about the MN's corresponding nodes, more specifically about the CN's IP addresses. Having this information, the PDG 103 needs to initiate a route optimization process with the MN 102 on behalf of the CN 101, to establish the PDG's IP address as the CN's CoA . For this purpose, the PDG 103 implements the full MlPv6 return routability and route optimization functionality of a MN and CN part. That is, the PDG 103 can self initiate RO, which denotes the MN part, and can respond to RO signaling, which denotes the CN part.

In the first route optimization process, the IP source address of the HoTi message is the CN's HoA. Thus, the PDG 103 needs to be modified to generate and transmit data packets having a different source address than the PDG's IP address. Correspondingly, the destination IP address of the HoT message is the CN's HoA. So, the PDG should be able to receive and process HoTs having a destination address different than the PDG's address itself. The decision, whether to accept and process such packets, may be made based on the packet's source address. If the packet's source address belongs to the MN 102 with which a RO has been already initiated by the PDG 103, the PDG 103 may accept and process the HoT message.

Further, the PDG 103 should implement a function deciding whether it should start setting up a new IPsec association with the MN 102 in transport mode. That is, the PDG 103 must decide whether to change from IPsec tunnel mode to transport mode. Therefore, the PDG 103 monitors, if both ROs are successfully completed and if the MN_{LA} is used as MN's CoA. If this is the case, then the PDG 103 starts a new IPsec association with the MN 102 in transport mode. This new IPsec association in transport mode is used for transmitting only data packets for the session between the MN 102 and the CN 101. If the MN 102 has sessions with other CNs, the data packets of those sessions are transmitted over the old IPsec association in tunnel mode between MN 102 and the PDG 103.

For the second RO, the PDG implements a function to decide whether to send the HoT message directly to the MN 102 or over the HA(MN) 105. In the beginning of the communication between the MN 102 and the PDG 103, the MN 102 informs the PDG 103, whether MN 102 implements capabilities to receive the HoT message directly from the CN 101. Having this information, the PDG 103 can properly decide how to further proceed with the second RO. If the PDG 103 is informed about the MN 102 being capable of receiving the HoT message directly, the PDG may send the HoT message directly to the MN 102. If the PDG 103 is informed about the MN 102 not being capable of receiving the HoT message directly, the PDG may send the HoT message to the HA(MN) 105 which then tunnels the HoT message to the MN 102.

Furthermore, the PDG 103 has the capability of modifying the IP header of the data packets in the downlink and uplink directions as described in Fig. 13 and the above paragraphs.

In the following, some possible changes to the MN are discussed.

The specification for route optimization doesn't define which IP address - either the CN's HoA or the CN's CoA - shall be used by the MN to perform route optimization, if the MN has a binding between the CN's HoA and CN's CoA. For the purpose of this invention, it is required that the MN performs route optimization with CN's CoA.

After the PDG has completed the first RO, the MN uses its local IP address (MN_{LA}) as CoA for the route optimization in the second step. Normally, the MN should use the IP address obtained by the PDG as CoA. However, a logic is implemented in the MN that the MN can use the MN_{LA} as CoA to start route optimization, if the CN's CoA is the IP address of the PDG.

Further, the route optimization implementation in the MN may be extended in a way that the MN allows to receive the HoT message not only over an MlPv6 tunnel from the HA(MN) 105, but also directly from the CN 101, which is in the case of this invention directly from the PDG. In the beginning of the association between the MN and the PDG, the MN and the PDG shall exchange information, whether this extension is implemented or not.

There are two options for the MN of sending data packets to the PDG. On the one hand, transmitting data packets over the IPsec association in tunnel mode or on the other hand, over the IPsec association in transport mode. Data packets to particular CNs, with which the first and second steps of the route optimization have been performed, are sent over the IPsec association in transport mode. Data packets to all other CNs are sent over the IPsec association in tunnel mode. Another embodiment of the invention relates to the implementation of the above described various embodiments using hardware and software. It is recognized that the various embodiments of the invention above may be implemented or performed using computing devices (processors), as for example general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the present invention may also be implemented by means of software modules which are executed by a processor or directly in hardware. Also a combination of software modules and a hardware implementation may be possible. The software modules or instructions may be stored on any kind of computer readable storage media, for example RAM, EPROM, EEPROM, flash memory, registers, hard disks, CD-ROM, DVD, etc.

## Claims

1. A method for reducing the header size of data packets on a communication link between a mobile node and a gateway, wherein the data packets are exchanged between the mobile node and a corresponding node via the gateway, the method comprising the steps of:
transmitting by the mobile node data packets to the correspondent node by utilizing a route-optimized header,
transmitting by the correspondent node data packets to the mobile node by utilizing a non-route-optimized header,
converting by the gateway the route-optimized header of the data packets from the mobile node into the non-route-optimized header, utilized by the correspondent node,
converting by the gateway the non-route-optimized header of the data packets from the correspondent node into the route-optimized header, utilized by the mobile node.

2. The method according to claim 1, wherein the mobile node utilizes the route-optimized header after a route optimization process is performed between the gateway and the mobile node, wherein the route optimization process is initiated and performed by the gateway on behalf of the corresponding node.

3. The method according to claim 2, wherein by performing the route optimization process, the gateway instructs the mobile node to direct all the data packets for the corresponding node to the gateway, and the gateway informs the mobile node that a new IP address of the corresponding node is the IP address of the gateway.

4. The method according to one of claims 2 to 3, wherein the route optimization process further comprises the steps of:
transmitting by the gateway a first initiating message to the mobile node while using the IP address of the corresponding node as a source address, and
transmitting by the gateway a second initiating message directed to the mobile node while using the IP address of the gateway as a source address.

5. The method according to one of claims 2 to 4, further comprising the steps of:
intercepting by the gateway a first reply message transmitted from the mobile node in response to the first initiating message, and
receiving by the gateway a second reply message transmitted by the mobile node in response to the second initiating message.

6. The method according to one of claims 1 to 5, wherein the conversion of the non-route-optimized header into the route-optimized header, and the conversion of the route-optimized header into the non-route-optimized header is performed by the gateway for each of the data packets after the gateway transmits a binding update message to the mobile node in response to the first and second reply message.

7. The method according to one of claims 1 to 6, wherein the step of converting the non-route-optimized header, including an IP header and an IP tunnel encapsulation header, to the route-optimized header, including an IP header and a route optimization header option, comprises the steps of:
removing the IP tunnel encapsulation header from the non-route-optimized header,
substituting the IP header of the non-route optimized header by a new IP header, and
inserting the route optimization header option in the non-route-optimized header.

8. The method according to claim 7, wherein the IP tunnel encapsulation header of the non-route-optimized header includes as source address an IP address of a home agent of the mobile node, and as destination address a first location dependent IP address of the mobile node, and wherein the route optimization header option to be inserted in the non-route-optimized header includes a location independent IP address of the corresponding node, and wherein the new IP header includes as source address a location dependent IP address of the corresponding node and as destination address a location independent IP address of the mobile node.

9. The method according to one of claims 1 to 8, wherein the step of converting the route-optimized header, including an IP header and a route optimization header option, to the non-route-optimized header, including an IP header and IP tunnel encapsulation header, is performed after the gateway transmits a binding update message to the mobile node and comprises the steps of:
removing the route optimization header option from the route-optimized header,
substituting the IP header of the route optimized header by a new IP header, and
inserting the IP tunnel encapsulation header in the route-optimized header.

10. The method according to claim 9, wherein the route optimization header option of the route-optimized header includes a location independent IP address of the corresponding node, and wherein the IP tunnel encapsulation header to be added to the route-optimized header includes as source address the first location dependent IP address of the mobile node and as destination address an IP address of a home agent of the mobile node, and wherein the new IP header includes as source address a location independent IP address of the mobile node and as destination address a location independent IP address of the corresponding node.

11. The method according to claim 1, wherein a route-optimized header is obtained by performing the steps of:
performing a first route optimization process between the gateway and the mobile node, wherein the route optimization process is initiated and performed by the gateway on behalf of the correspondent node, and
after finishing the first route optimization process, performing a second route optimization process between the gateway, on behalf of the correspondent node, and the mobile node, wherein the second route optimization process is initiated by the mobile node, and
after finishing the second route optimization process, switching from using an additional security tunnel for exchanging the data packets between the gateway and the mobile node to attaching a security option field to a header of each data packet in order to enable the payload encryption.

12. The method according to claim 11, wherein by performing the first route optimization process, the gateway instructs the mobile node to direct all the data packets destined for the corresponding node to the gateway, and the, gateway informs the mobile node that a new IP address of the corresponding node is the IP address of the gateway, and wherein by performing the second route optimization process, the mobile node instructs the gateway to direct all the data packets destined for the mobile node to the first location dependent IP address of the mobile node.

13. The method according to one of claims 11 to 12, wherein the first route optimization process further comprises the steps of:
transmitting by the gateway a first initiating message, corresponding to the first route optimization process, to the mobile node while using an IP address of the corresponding node as source address,
transmitting by the gateway a second initiating message, corresponding to the first route optimization process, to the mobile node while using an IP address of the gateway as source address, and
wherein the second route optimization process further comprises the steps of:
transmitting by the mobile node a first initiating message, corresponding to the second route optimization process, to the gateway by using a location independent IP address of the mobile node as source address, and
transmitting by the mobile node a second initiating message, corresponding to the second route optimization process, to the gateway, while using a second location dependent address of the mobile node as source address.

14. The method according to claim 13, further comprising the steps of:
intercepting by the gateway a first reply message destined to the corresponding node, corresponding to the first route optimization process, transmitted by the mobile node in response to the first initiating message of the first route optimization process,
receiving by the gateway a second reply message of the first route optimization process being transmitted by the mobile node in response to the second initiating message of the first route optimization process,
transmitting by the gateway a first binding update message to the mobile node after receiving by the gateway the first and second reply messages of the first route optimization process,
receiving by the mobile node a first and a second reply message of the second route optimization process being respectively transmitted by the gateway in response to the first and second initiating message of the second route optimization process, and
transmitting by the mobile node a second binding update message to the gateway after receiving by the mobile node the first and second reply messages of the second route optimization process.

15. The method according to claim 14, wherein the gateway transmits the first reply message, corresponding to the second route optimization, to the home agent of the mobile node, which then tunnels the first reply message to the mobile node.

16. The method according to claims 14 or 15, wherein the conversion of the non-route-optimized header into the route-optimized header, and the conversion of the route-optimized header into the non-route-optimized header are performed by the gateway for each of the data packets, after the mobile node transmits the second binding update message to the gateway in response to the first and second reply messages of the second route optimization process and after switching from using a security tunnel for exchanging the data packets between the gateway and the mobile node to attaching a security option field to a header of each data packet.

17. The method according to one of claims 1, 11 to 16, wherein the step of converting the non-route-optimized header, including an IP header and an IP tunnel encapsulation header, to the route-optimized header, including an IP header, an IP security option field and a first and a second route optimization header option, comprises the steps of:
removing the IP tunnel encapsulation header from the non-route-optimized header,
substituting the IP header of the non-route optimized header by a new IP header, and
inserting the first and second route optimization header options and the IP security option field in the non-route-optimized header.

18. The method according to claim 17, wherein the new IP header includes as source address the IP address of the gateway and as destination address the second location dependent address of the mobile node, and wherein the first route optimization header option includes a location independent address of the correspondent node, included as source address in the IP header of the non-route-optimized header, and the second route optimization header option includes a location independent IP address of the mobile node, included as destination address in the IP header of the non-route-optimized header.

19. The method according to one of claims 1, 11 to 18, wherein the step of converting the route-optimized header, including an IP header, an IP security option field and a first and a second route optimization header option, to the non-route-optimized header, including an IP header and an IP tunnel encapsulation header, comprises the steps of:
removing the first and second route optimization header option and the IP security option field from the route-optimized header,
substituting the IP header of the route-optimized header by a new IP header, and
inserting the IP tunnel encapsulation header in the route-optimized header.

20. The method according to claim 19, wherein the new IP header includes as source address a location independent address of the mobile node, included in the second route optimization header option, and wherein the new IP header includes as destination address a location independent address of the corresponding node, included in the first route optimization header option, and wherein the IP tunnel encapsulation header to be inserted in the route-optimized header includes as source address a first location dependent IP address of the mobile node and as destination address an IP address of a home agent of the mobile node.

21. The method according to one of claims 11 to 20, wherein the security tunnel between the gateway and the mobile node is established by a first security transmission mode used by the gateway and mobile node to exchange the data packets, and wherein the attachment of the security option field to a header of each data packet exchanged between the gateway and the mobile node is performed in a second security transmission mode.

22. The method according to claim 21, wherein the first security transmission mode is an IPsec tunnel mode, utilizing an IPsec header in the data packets, and wherein the second security transmission mode is an IPsec transport mode, utilizing an Encapsulating Security Payload field in the data packets.

23. The method according to one of claims 21 to 22, wherein after performing the first and second route optimization processes, the route-optimized IP header and a header used for encapsulating the data packets over the first security transmission mode tunnel between the gateway and the mobile node have the same IP addresses in the respective source and destination address fields, and by using the second security transmission mode, only the IP header is used for exchanging the data packets between the gateway and the mobile node.

24. The method according to one of claims 11 to 23, wherein the second route optimization process is initiated and performed by the mobile node using the location independent IP address of the correspondent node as destination address in the first and second initiating message of the second route optimization process.

25. The method according to one of claims 11 to 24, wherein the second route optimization process further comprises the steps of:
intercepting by the home agent of the mobile node the first initiating message of the second route optimization process and tunneling it to the gateway,
transmitting by the gateway a first reply message of the second route optimization process to the home agent of the mobile node with the location independent IP address of the correspondent node as source address,
tunneling by the home agent the first reply message of the second route optimization process, received from the gateway, to the mobile node,
after receiving the first and second reply message of the second route optimization process by the mobile node, generating a second binding update message by the mobile node and transmitting it to the location independent IP address of the corresponding node, and
intercepting by the gateway the second binding update message, received from the mobile node.

26. The method according to one of claims 11 to 25, wherein the mobile node communicates with multiple corresponding nodes simultaneously and wherein the first and second route optimization process is initiated and performed by the gateway respectively mobile node separately for each corresponding node.

27. The method according to one of claims 1 to 26, wherein the gateway holds information about all corresponding nodes which are in communication with the mobile node, wherein the gateway obtains the information about all corresponding nodes by monitoring the data packets directed to/from the mobile node or by requesting the information from a home agent of the mobile node.

28. A gateway for reducing the header size of data packets, exchanged between a mobile node and a corresponding node, wherein the data packets are exchanged via the gateway, comprising:
a receiver adapted to receive data packets incoming from the mobile node, wherein the data packets incoming from the mobile node comprise a route-optimized header,
the receiver is further adapted to receive data packets incoming from the correspondent node, wherein the data packets incoming from the correspondent node comprise a non-route-optimized header,
a processor adapted to convert the route-optimized header of the data packets, incoming from the mobile node, into the non-route-optimized header,
the processor is further adapted to convert the non-route-optimized header of the data packets, incoming from the correspondent node, into the route-optimized header
a transmitter adapted to transmit the data packets with the route-optimized header to the mobile node, and
the transmitter is further adapted to transmit the data packets with the non-route-optimized header to the corresponding node.

29. The gateway according to claim 28, wherein the gateway is adapted to hold information about all corresponding nodes which are in communication with the mobile node, wherein the gateway obtains the information about all corresponding nodes by monitoring the data packets directed to/from the mobile node or by requesting the information from a home agent of the mobile node.

30. The gateway according to one of claims 28 to 29, wherein the gateway is adapted to initiate and perform a first route optimization with the mobile node on behalf of the corresponding node.

31. The gateway according to one of claims 28 to 30, wherein
the processor is adapted to generate a first initiating message of the first route optimization process with the location independent IP address of the corresponding node as source address arid the location independent IP address of the mobile node as destination address,
the transmitter of the gateway is adapted to transmit the first initiating message of the first route optimization process to the mobile node,
the processor is further adapted to generate a second initiating message of the first route optimization process with the location dependent IP address of the corresponding node as source address and the location independent IP address of the mobile node as destination address,
the transmitter of the gateway is adapted to transmit the second initiating message of the first route optimization process to the mobile node, and
the receiver of the gateway is adapted to intercept a first reply message of the first route optimization process from the mobile node, destined to the correspondent node.

32. The gateway according to one of claims 28 to 31, wherein the processor is adapted to generate a first binding update message after the receiver receives the first and second reply messages of the first route optimization process, and wherein the transmitter is adapted to transmit the first binding update message to the mobile node with the location dependent IP address of the corresponding node as source address.

33. The gateway according to one of claims 28 to 32, wherein the gateway is adapted to transmit a first reply message of a second route optimization directly to the mobile node, if the mobile node is capable of receiving the first reply message of the second route optimization with the location dependent IP address of the corresponding node as source address, and wherein the gateway is adapted to transmit a first reply message of the second route optimization to the home agent of the mobile node, which is then tunnelled by the home agent of the mobile node to the mobile node, if the mobile node is not capable of receiving the first reply message of the second route optimization with the location dependent IP address of the corresponding node as source address.

34. The gateway according to claim 33, wherein the gateway switches from using a security tunnel between the gateway and the mobile node to attaching a security option field to a header of each data packet, after the gateway receives a second binding update message of the second route optimization process.

35. The gateway according to one of claims 28 to 34, wherein the gateway is adapted to convert the non-route-optimized header, including an IP header and an IP tunnel encapsulation header, to the route-optimized header, including an IP header, an IP security option field and a first and a second route optimization header option, and wherein
the processor is adapted to remove an IP tunnel encapsulation header from the non-route-optimized header,
the processor is further adapted to substitute an IP header of the non-route optimized header by a new IP header, and
the processor is further adapted to insert first and second route optimization header options and an IP security option field in the non-route-optimized header.

36. The gateway according to one of claims 28 to 35, wherein the gateway is adapted to convert the route-optimized header, including an IP header, an IP security option field and a first and a second route optimization header option, to the non-route-optimized header, including an IP header and an IP tunnel encapsulation header, and wherein
the processor is adapted to remove a first and second route optimization header option and the IP security option field from the route-optimized header,
the processor is adapted to substitute an IP header of the route-optimized header by a new IP header, and
the processor is adapted to insert an IP tunnel encapsulation header in the route-optimized header. ,

37. The gateway according to one of claims 28 to 36, further comprising means to perform or participate in the steps of the method according to one of claims 1 to 27.

38. A mobile node which exchanges data packets with a corresponding node via a home agent of the mobile node, and is adapted to perform a second route optimization process with the corresponding node by using a second location dependent IP address of the mobile node as its source address for the second route optimization process.

39. The mobile node according to claim 38, wherein the mobile node is adapted to use a route-optimized header for transmitting data packets to the corresponding node, after performing the second route optimization process.

40. The mobile node according to one of claims 38 to 39, wherein the mobile node is adapted to receive a first reply message of the second route optimization process directly from the gateway, transmitted from the gateway with the IP address of the gateway as source address.

41. The mobile node according to claim 40, wherein the mobile node is adapted to inform the gateway, if it is capable of receiving the first reply message of the second route optimization process directly from the gateway with the location dependent IP address of the corresponding node as source address.

42. The mobile node according to one of claims 38 to 41, wherein the mobile node switches from using a security tunnel between the mobile node and the gateway to attaching a security option field to a header of each data packet, after transmitting a second binding update message of the second route optimization process to the gateway.

43. The mobile node according to one of claims 38 to 42, wherein upon detecting that the first initiating message of the first route optimization process has not been received via a tunnel, the mobile node is adapted to directly transmit the first reply message of the first route optimization process to the gateway by not transmitting over a tunnel.

44. The mobile node according to one of claims 38 to 43, further comprising means to perform or participate in the steps of the method according to one of claims 1 to 27.

45. A communication system comprising a gateway according to one of claims 28 to 37 and a mobile node according to one of claims 38 to 44.
